# EUROPEAN PATENT APPLICATION

(11) **EP 4 765 869 A1**
(43) Date of publication of application: **24.06.2026**
(21) Application number: 25201833.8
(22) Date of filing: 12.09.2025
(51) Int. Cl.: H04R 1/32, B60R 11/02, H04R 1/02

(54) **DISPLAY-LINKED SOUND SYSTEM AND CONTROL METHOD THEREOF**

(30) Priority: 23.12.2024 KR 20240194524
(71) Applicant: Hyundai Mobis Co., Ltd., Gangnam-gu Seoul 06141 (KR)
(72) Inventor: SON, Se Myung, 16891 Yongin-si (KR); JEON, Ju Young, 16891 Yongin-si (KR); CHOI, Jong Wan, 16891 Yongin-si (KR)
(74) Representative: Vossius & Partner Patentanwälte Rechtsanwälte mbB

(57) **Abstract**

According to one embodiment of the present invention, a sound system for a moving object is proposed, and the sound system may include a speaker whose directivity angle is adjustable and which is embedded or installed in a dashboard, and a controller adjusting a directivity angle of the speaker, wherein the controller may be configured to adjust the directivity angle of the speaker according to a deployed state of a display installed on the dashboard or a center fascia.

## Description

This application claims the benefit of Korean Patent Application No. 10-2024-0194524, filed on December 23, 2024.

### BACKGROUND

### Technical Field

The present invention relates to a display-linked sound system, a control method thereof, and a vehicle having a display-linked sound system, and more specifically, to a sound system configured to adjust a directivity angle of a speaker according to an deployed state of a display, a control method therefor, and a mobility device or a vehicle.

### Discussion of the Related Art

A center fascia display of a vehicle can display various visual information on the vehicle. Such a display device can be installed on a dashboard of a vehicle positioned in front of a driver's seat and a passenger's seat and can provide various convenient information such as navigation, vehicle management and operation, the Internet, entertainment, etc.

In this regard, movable display devices are being developed and mass-produced, and the movable display devices can move up and down or left and right with respect to the dashboard. As the display moves along a guide, a driver and a front passenger can selectively use the display. In the case of a pop-up style display, the display can be stored and then pulled out and used if necessary.

Since fixed displays have a fixed installation position, space utilization inside a vehicle is limited, and the larger the display size, the lower the forward visibility.

Meanwhile, as the size of the pop-up style movable display increases, a field of vision of a driver is obstructed while driving, and thus in order to limit this, a lower end portion of the display is designed to be stored inside a storage space while the vehicle travels.

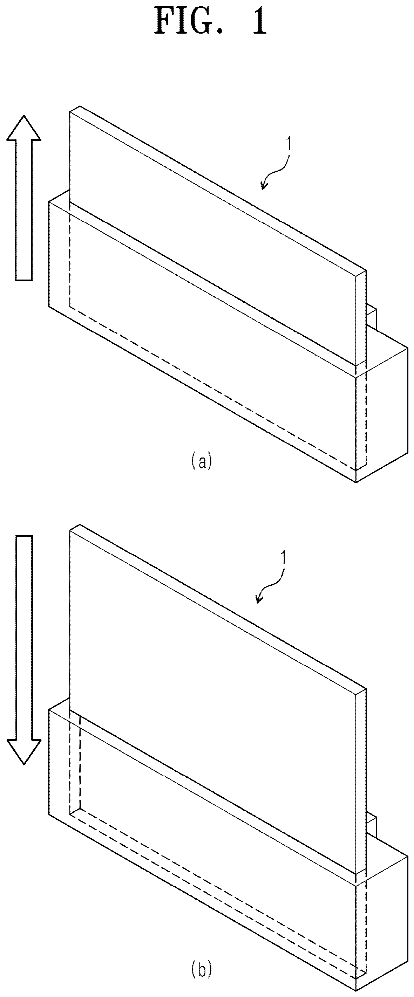

FIG. 1 shows a pop-up style movable display device 1. FIG. 1A shows moving upward from a bottom position corresponding to an initial position, and FIG. 1B shows moving downward from a top position corresponding to the initial position. The movable display device 1 is configured to move upward or downward from the initial position to a final position. The initial position is one of the bottom position and the top position, and the final position is the other one.

Another example of the movable display device 1 is an expandable display or a rollable display.

The expandable display can be used to adjust the display size or provide a user interface depending on a specific situation. An example is a slide display that is usually hidden in the dashboard and appears as needed. There are advantages that it is possible to efficiently provide information (navigation or a vehicle state) needed by a driver or passengers while a vehicle travels and space utilization is high because the display expands only as needed.

However, when the display is expanded and exposed from the dashboard or center fascia according to the movable or expandable display, the quality of an audio signal of a speaker installed on the dashboard or the like transmitted to the driver or passengers deteriorates.

The present invention intends to provide a method of adjusting the directivity of a sound system including a speaker depending on the expanded and deployed state of the display.

This does not necessarily occur when the type of display is a movable or expandable display, and the present invention is not limited to the name of the display.

### SUMMARY

The present invention is directed to proposing a display-linked sound system, a control method therefor, and a vehicle having the display-linked sound system.

The present invention is directed to proposing a display-linked sound system for adjusting a directivity angle of a speaker according to an expanded or deployed state of a display, a control method therefor, and a vehicle having a display-linked sound system.

Objects of the present invention are not limited to the above objects. Other tasks that are not described above can be understood by those skilled in the art based on the following description of the present invention.

According to one embodiment of the present invention, a sound system for a moving object is proposed, and the sound system may include a speaker whose directivity angle is adjustable and which is embedded or installed in a dashboard, and a controller adjusting a directivity angle of the speaker, wherein the controller may be configured to adjust the directivity angle of the speaker according to a deployed state of a display installed on the dashboard or a center fascia.

Additionally or alternatively, the controller may be configured to adjust the directivity angle of the speaker based on that the display is present on a propagation path of an audio signal reaching a driver or a passenger from the speaker.

Additionally or alternatively, the directivity angle of the speaker may be determined differently according to the deployed state of the display.

Additionally or alternatively, the directivity angle of the speaker may be set to 0 degree based on that the deployed state of the display is an initial state or the display is completely embedded in the dashboard or the center fascia.

Additionally or alternatively, the directivity angle of the speaker may be adjusted to face an upper front of the display or an upper rear of the display.

Additionally or alternatively, the sound system may further include a lighting installed inside an opening of the dashboard in which the speaker is embedded or installed.

Additionally or alternatively, the controller may be configured to turn on the lighting as the adjusting of the directivity angle of the speaker begins.

Additionally or alternatively, the speaker may include at least one of a center speaker, a tweeter, or a mid-range speaker.

Additionally or alternatively, the directivity angle of the speaker may be adjusted within a preset range in a three-dimensional space.

According to another embodiment of the present invention, there may be provided a control method of a sound system for a moving object, which is performed by a sound system including a speaker and includes obtaining information on a deployed state of a display installed on a dashboard or a cent fascia, and adjusting a directivity angle of the speaker according to the deployed state of the display

According to still another embodiment of the present invention, a moving object is proposed, the moving object may include a sound system, and the sound system may include a speaker whose directivity angle is adjustable and which is embedded or installed in a dashboard, and a controller adjusting a directivity angle of the speaker, wherein the controller may be configured to adjust the directivity angle of the speaker according to a deployed state of an expandable display installed on the dashboard or a center fascia.

The above configurations of the present invention are some of embodiments of the present invention. Various configurations other than the above configurations may be derived and understood based on the following detailed descriptions of the present invention.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 (a) and FIG. 1(b) show a pop-up style display device according to the present invention;
FIG. 2 is an overall block diagram of an autonomous vehicle to which an autonomous driving device may be applied;
FIG. 3 is an exemplary view showing an example of the autonomous driving device being applied to a vehicle;
FIG. 4 is a graph showing a sound degradation band according to the expansion, deployed, or presence of a display on a sound propagation path;
FIG. 5 (a), FIG. 5 (b) and FIG. 5 (c) show an example of adjusting a directivity angle of a speaker according to the expansion or deployed of a display according to one embodiment of the present invention;
FIG. 6 shows a vehicle dashboard to which the sound system for adjusting a directivity angle of a speaker according to the expansion or deployed of the display according to one embodiment of the present invention is applied;
FIGS. 7(a), 7(b), 8(a) and 8(b) show cross-sectional views of the sound system for adjusting a directivity angle of a speaker according to the expansion or deployed of the display according to one embodiment of the present invention;
FIG. 9 shows a sound system to which lighting is applied according to one embodiment of the present invention;
FIGS. 10 and 11 show a flowchart of a method of controlling a directivity angle of a speaker according to the present invention; and
FIG. 12 shows a block diagram of the sound system for controlling a directivity angle of a speaker according to the present invention.

### DETAILED DESCRIPTION

The embodiments of the present invention will now be described below with reference to the accompanying drawings.

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

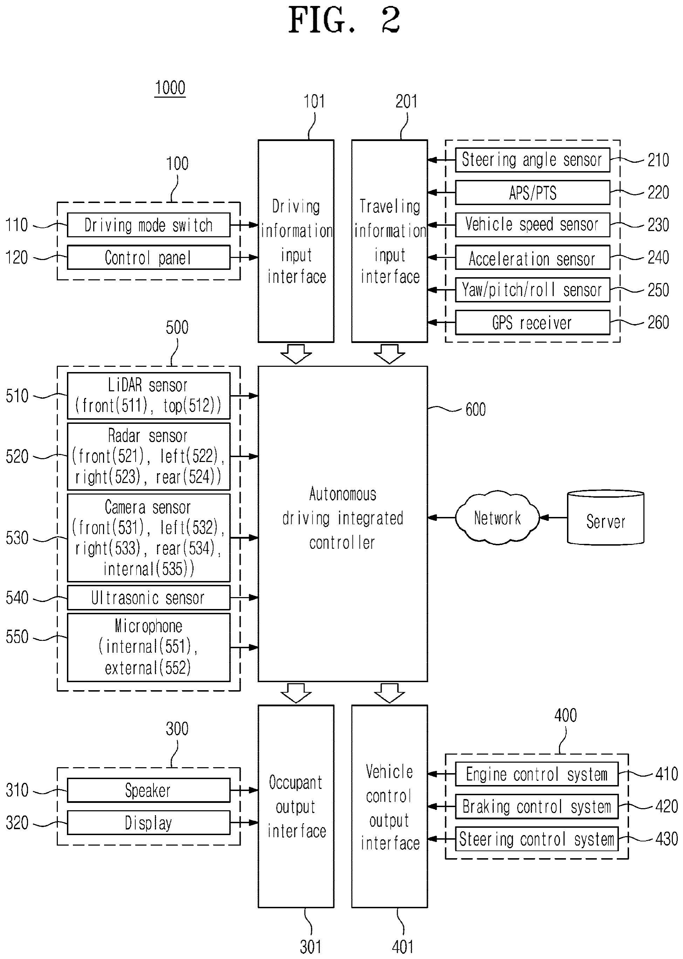

FIG. 2 is a block diagram of an overall autonomous driving control system to which an autonomous driving device according to one of embodiments of the present invention may be applied.

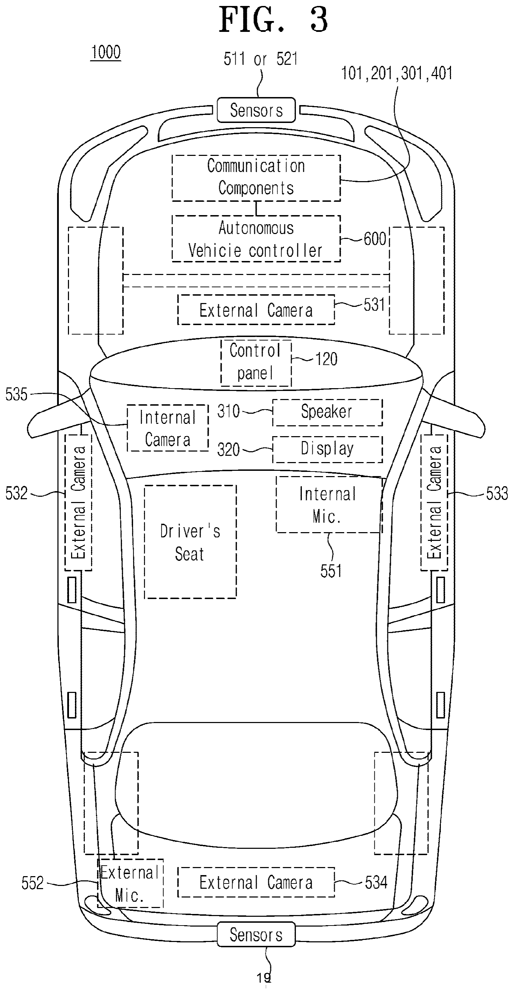

FIG. 3 is an exemplary view showing an example of an autonomous driving device according to one of embodiments of the present invention being applied to a vehicle.

First, a structure and function of an autonomous driving control system (e.g., an autonomous vehicle) to which an autonomous driving device according to the present embodiments may be applied will be described with reference to FIGS. 2 and 3.

As shown in FIG. 2, an autonomous vehicle 1000 may be implemented centered on an integrated autonomous driving control unit 600 that transmits and receives data necessary for autonomous driving control of the vehicle through a driving information input interface 101, a traveling information input interface 201, a passenger output interface 301, and a vehicle control output interface 401. However, the integrated autonomous driving control unit 600 may also be referred to as a controller, a processor, or simply a control unit in the specification.

The integrated autonomous driving control unit 600 may acquire traveling information according to the passenger's manipulation of the user input unit 100 in an autonomous driving mode or manual driving mode of the vehicle through the driving information input interface 101. As shown in FIG. 2, the user input unit 100 may include a driving mode switch 110 and a control panel 120 (e.g., a navigation terminal mounted on the vehicle, a smart phone or tablet PC of the passenger, etc.), and thus the traveling information may include the driving mode information and navigation information of the vehicle.

For example, the vehicle driving mode (i.e., an autonomous driving mode/manual driving mode or sports mode/eco mode/safe mode/normal mode) determined according to the passenger's manipulation of the driving mode switch 110 may be transmitted to the integrated autonomous driving control unit 600 through the driving information input interface 101 as the traveling information.

In addition, navigation information such as a passenger's destination, a route to a destination (the shortest route or preferred route selected by the passenger among candidate routes to the destination, etc.) input by the passenger through the control panel 120 may be transmitted as the traveling information to the integrated autonomous driving control unit 600 through the driving information input interface 101.

Meanwhile, the control panel 120 may be implemented as a touch screen panel that provides a user interface (UI) for the driver to input or modify information for autonomous driving control of the vehicle, and in this case, the driving mode switch 110 may be implemented as a touch button on the control panel 120.

In addition, the integrated autonomous driving control unit 600 may acquire traveling information indicating the traveling state of the vehicle through the traveling information input interface 201. The traveling information may include various pieces of information indicating the traveling state and behavior of the vehicle, such as a steering angle formed by the passenger manipulating a steering wheel, a stroke of an accelerator pedal or a stroke of a brake pedal formed by the depression of the accelerator pedal or the brake pedal, and a vehicle speed, acceleration, yaw, pitch, and roll as behaviors formed by the vehicle, and each traveling information may be detected by a traveling information detection unit 200 including a steering angle sensor 210, an accelerator position sensor (APS)/pedal travel sensor (PTS) 220, a vehicle speed sensor 230, an acceleration sensor 240, and a yaw/pitch/roll sensor 250 as shown in FIG. 2.

In addition, the traveling information of the vehicle may include the location information of the vehicle, and the location information of the vehicle may be acquired through a global positioning system (GPS) receiver 260 applied to the vehicle. This traveling information may be transmitted to the integrated autonomous driving control unit 600 through the traveling information input interface 201 and used to control the traveling of the vehicle in the autonomous driving mode or manual driving mode of the vehicle.

In addition, the integrated autonomous driving control unit 600 may transmit the traveling state information provided to the passenger in the autonomous driving mode or manual driving mode of the vehicle to the output unit 300 through the passenger output interface 301. That is, the integrated autonomous driving control unit 600 may transmit the traveling state information of the vehicle to the output unit 300, thereby allowing the passenger to check the autonomous driving state or manual driving state of the vehicle based on the traveling state information output through the output unit 300, and the traveling state information may include various pieces of information indicating the traveling state of the vehicle, such as a current traveling mode and shift range of the vehicle, and a vehicle speed.

In addition, when the integrated autonomous driving control unit 600 determines that a warning is required for the driver in the autonomous driving mode or manual driving mode of the vehicle together with the traveling state information, the warning information may be transmitted to the output unit 300 through the passenger output interface 301 so that the output unit 300 may output a warning to the driver. In order to output the traveling state information and warning information audibly and visually, the output unit 300 may include a speaker 310 and a display device 320 as shown in FIG. 2. In this case, the display device 320 may be implemented as the same device as the control panel 120 or implemented as a separate independent device.

For reference, the symbols shown in FIG. 3 may perform the same or similar functions as the symbols shown in FIG. 2, and FIG. 3 shows a relative positional relationship (based on the inside of an autonomous driving vehicle 1000) of components in more detail compared to FIG. 2.

Hereinafter, a sound system 10 according to the present invention will be described. The present invention may be applied to various moving objects such as robots, drones, etc. as well as vehicles.

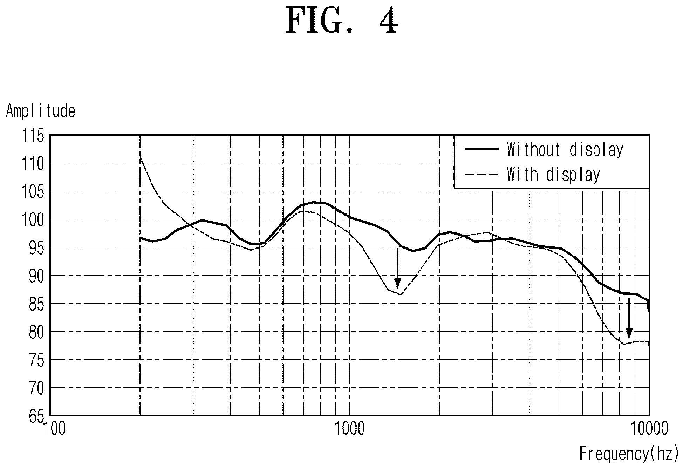

FIG. 4 is a graph showing a sound degradation band according to the expansion, deployed, or presence of a display on a sound propagation path.

As shown, as a display is expanded, deployed, or present on the sound propagation path, deterioration of the transmission of the audio signal occurs in a specific frequency band, that is, in a range between about 1 kHz and 2 kHz and a range of about 6 kHz or more.

The present invention proposes a method of preventing or reducing such deterioration of the transmission of the audio signal.

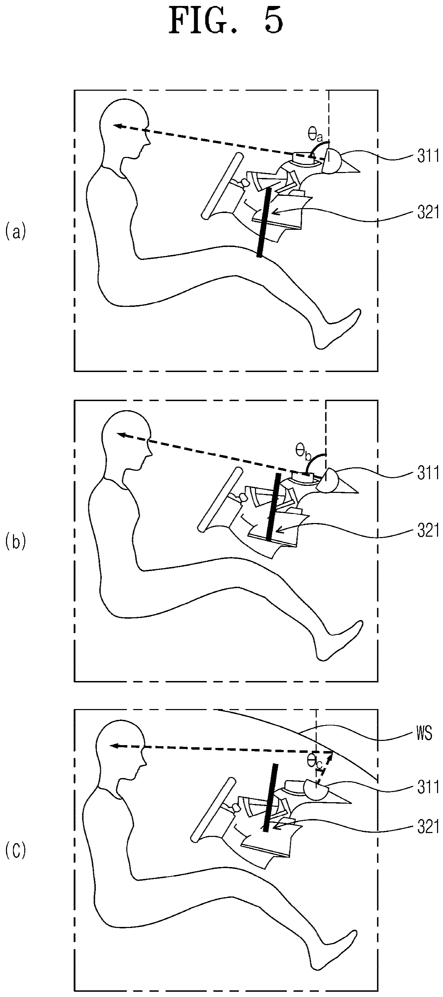

FIG. 5 shows an example of adjusting a directivity angle of a speaker according to the expansion or deployed of a display according to one embodiment of the present invention.

A center speaker 311, which rotates in conjunction with the deployed state of the display 321 on the upper end of the dashboard, is proposed.

Scenarios of the deployed state are exemplified as ① a completely embedded, ② semi-deployed, and ③ completely deployed state and correspond to (a), (b), and (c) of FIG. 5, respectively. A rotational angle of the center speaker differs depending on each scenario. When the display 321 is present on the propagation path of the sound waves or audio signals from the speaker to the passengers, the directivity angle of the speaker is adjusted to an angle that minimizes sound quality deterioration of a specific frequency band, thereby improving quantitative and qualitative sound quality performance.

FIG. 5C is a scenario in which, in a state in which it is difficult to secure a direct sound wave propagation path from the speaker 311, the directivity angle of the speaker 311) is adjusted toward a windshield WS of the moving object so that sound waves reflected from the windshield are transmitted to the passengers.

That is, the directivity angle of the speaker 311 may be adjusted to face an upper front or upper rear of the display 321.

Examples of the directivity angle of the speaker shown in FIG. 5A, 5B, and 5C are as follows.

**[Table 1]**

| Display Scenario | FIG. 5A | FIG. 5B | FIG. 5C |
|---|---|---|---|
| Directivity angle | Forward directivity (+70°) (θₐ) | Forward directivity (+60°) (θ_{b}) | Rearward directivity (- 15°) (θ_{c}) |

In this way, the present invention may transmit an optimal audio signal to passengers by adjusting the directivity angle of the speaker when the display is located on the propagation path of the audio signal according to the deployed of the display 321.

In the present invention, the speaker 311 may include at least one of speakers installed on a dashboard, a center fascia, and behind the display 321 with respect to a passenger, such as a center speaker, a tweeter, a mid-range speaker, etc.

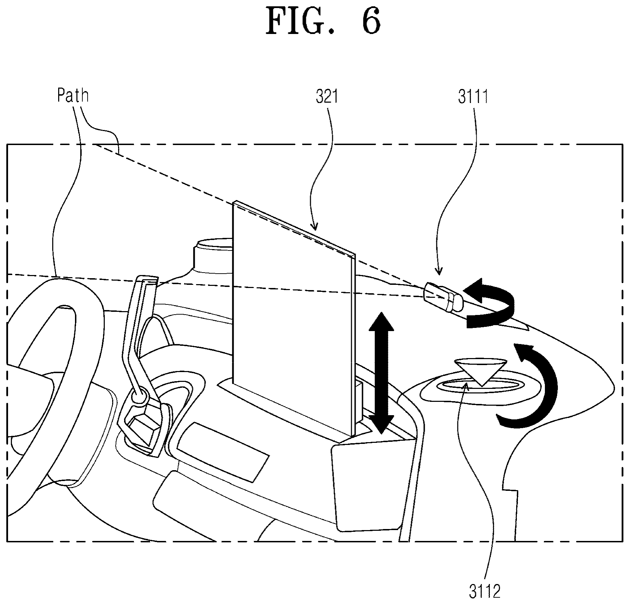

FIG. 6 shows a dashboard to which the sound system for adjusting a directivity angle of a speaker according to the expansion or deployed of the display according to one embodiment of the present invention is applied.

Hereinafter, the state indicating the expansion or deployed of the display will be simply referred to as an "deployed state."

FIG. 6 shows a case in which a center speaker 3111 and a tweeter 3112 are installed on a dashboard. The display 321 is controlled so that its exposure area is expanded or reduced in directions of shown arrows, and its deployed state may be controlled to maintain not only a completely embedded state or a completely expanded state, but also at least one state therebetween. In addition, the deployed state in which the exposure of the display 321 is the least may not necessarily be a completely embedded state. For example, as in FIG. 1A, a state in which a portion of the display 321 is exposed may be a minimally deployed state.

A directivity angle of the center speaker 311 may be adjusted depending on the deployed state of the display 321. The shown arrows are an example of the directivity adjustment range, and preferably, the directivity of the center speaker 311 may be adjusted within a preset range in a three-dimensional space in which a speaker is installed. That is, when the space in which the speaker is installed may be decomposed into x, y, and z axes, the directivity angle of the speaker may be adjusted not only on a plane composed of at least two axes among the three axes, but also in a space composed of three axes.

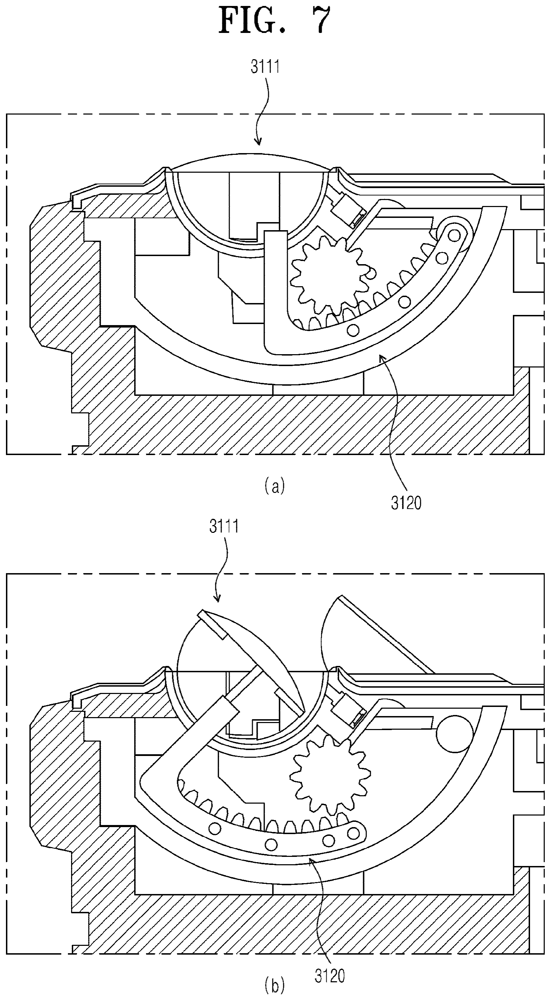

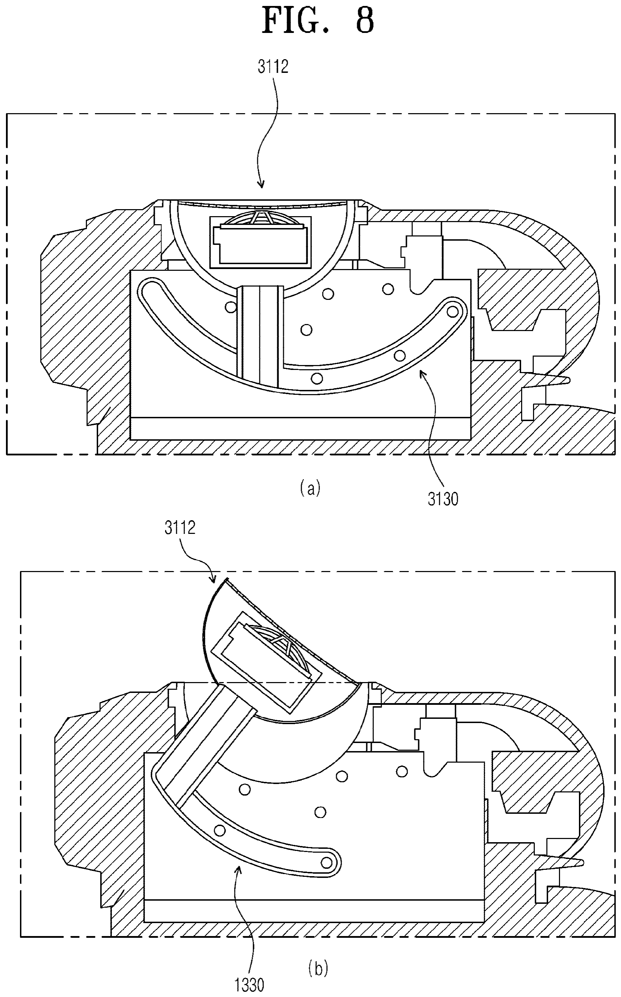

FIGS. 7 and 8 show cross-sectional views of the sound system for adjusting a directivity angle of a speaker according to the expansion or deployed of the display according to one embodiment of the present invention.

FIG. 7 shows the center speaker 3111 and a rotational driving unit 3120 therefor, and FIG. 8 shows the tweeter 3112 and a rotational driving unit 3130 therefor. FIGS. 7 and 8 show a right side indicating a passenger direction.

FIG. 7A shows a deployed state of the center speaker 3111 when the display (not shown) is in a completely embedded state, and FIG. 7B shows a deployed state of the center speaker 3111 when the display (not shown) is in a completely expanded state.

FIG. 8A shows a deployed state of the tweeter 3112 when the display (not shown) is in a completely embedded state, and FIG. 8B shows a deployed state of the tweeter 3112 when the display (not shown) is in a completely expanded state.

The rotational driving unit 3130 may be composed of a curved rack and gear.

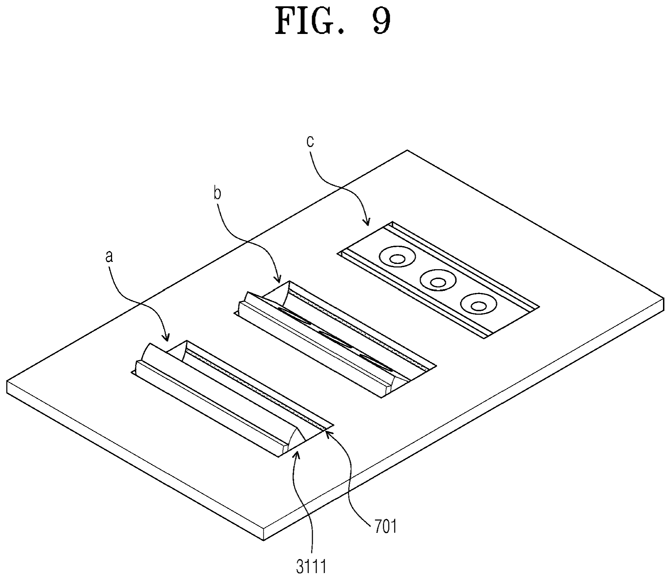

FIG. 9 shows a sound system to which lighting is applied according to one embodiment of the present invention.

A lighting 701 may be installed inside an opening in which the speaker 3111 is embedded or installed. The lighting 701 may serve as an ambient light or a mood light.

Referring to FIG. 9, the state or appearance of the lighting 701 according to the directivity angle of the speaker 3111 is shown. a represents a case in which the directivity angle of the speaker 3111 is adjusted maximally, b represents a case in which the directivity angle of the speaker 3111 is adjusted to an intermediate degree, and c represents a case in which the directivity angle is not adjusted.

The lighting 701 may be turned on all the time when the display (not shown) is activated, but may preferably be controlled to be turned on when the adjusting of the directivity angle of the speaker 3111 begins.

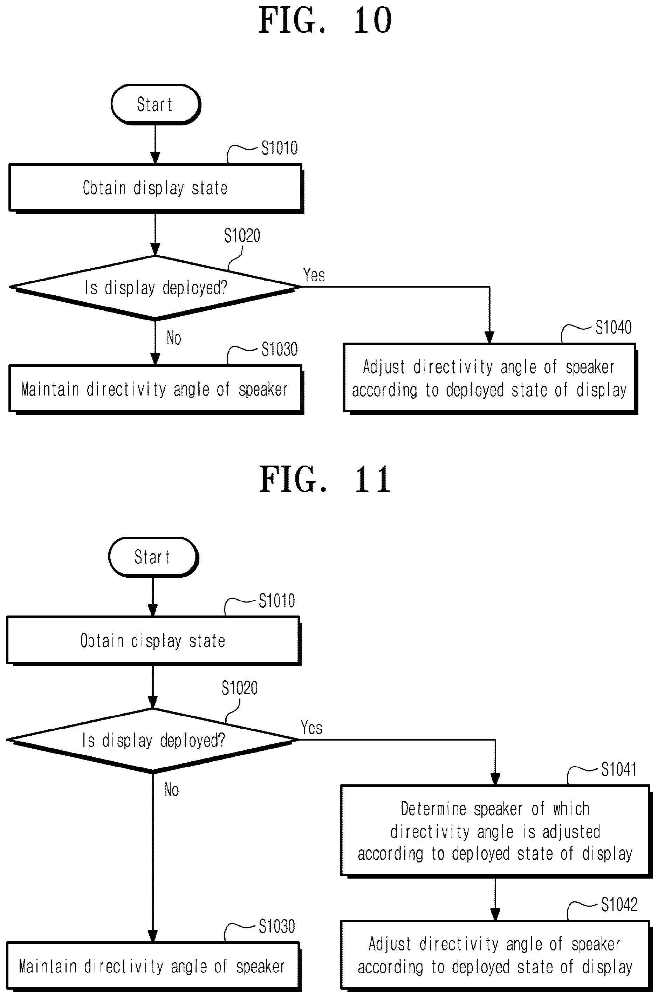

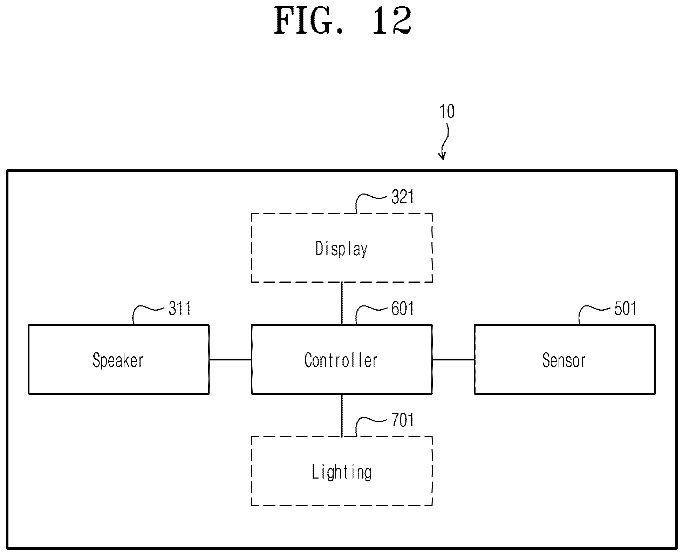

FIGS. 10 and 11 show a flowchart of a method of controlling a directivity angle of a speaker according to the present invention. A method according to FIGS. 10 and 11 may be performed by the sound system 10 including a speaker or a controller 601 of the system 10. Hereinafter, for the sake of simplicity, the method will be described as being performed by the "sound system 10." The sound system 10 or the controller 601 will be described below with reference to FIG. 12.

The sound system 10 may be configured to obtain information on the deployed state of the display (S1010). The deployed state of the display may be information stored in a memory managed by the controller 601 or the like. Alternatively, the deployed state of the display may be information obtained in real time through a sensor.

The sound system 10 may check whether the display is deployed (S1020).

Since the display is not deployed, the sound system 10 may be configured to maintain the directivity of the speaker (S1030).

As the display is in the deployed state, the sound system 10 may be configured to adjust the directivity angle of the speaker according to the deployed state of the display (S1040). In this case, the directivity angle of the speaker may be configured to be adjusted within a preset range in a three-dimensional space.

FIG. 11 is a method according to an embodiment that specifies operation S1040 of FIG. 10. Unlike FIG. 10, FIG. 11 includes a procedure for specifying a speaker to perform directivity angle adjustment when a plurality of speakers are installed on a dashboard or a center fascia.

The sound system 10 may be configured to obtain information on the deployed state of the display (S1010). The deployed state of the display may be information stored in a memory managed by the controller 601 or the like. Alternatively, the deployed state of the display may be information obtained in real time through a sensor.

The sound system 10 may check whether the display is deployed (S1020).

Since the display is not deployed, the sound system 10 may be configured to maintain the directivity of the speaker (S1030).

As the display is in the deployed state, the sound system 10 may be configured to determine a speaker to adjust the directivity angle according to the deployed state of the display (S1041).

When the speaker of which directivity angle is to be adjusted is determined, the sound system 10 may be configured to adjust the directivity angle of the corresponding speaker according to the deployed state of the display (S1042). In this case, the directivity angle of the speaker may be configured to be adjusted within a preset range in a three-dimensional space.

FIG. 12 shows a block diagram of the sound system for controlling a directivity angle of a speaker according to the present invention.

The sound system 10 may include the speaker 311 of which directivity angle is adjustable and which is embedded or installed in a dashboard. Here, the speaker may include at least one of a center speaker, a tweeter, and a mid-range speaker, and the name of the speaker does not limit the present invention.

The sound system 10 may include the controller 601 configured to adjust the directivity angle of the speaker. The controller 601 may be configured to adjust the directivity angle of the speaker 311 according to the deployed state of the display 321 installed on the dashboard or the center fascia.

In addition, the controller 601 may be configured to adjust the directivity angle of the speaker 311 when the display is present on the propagation path of the audio signal reaching the driver or passenger from the speaker 311.

The directivity angle of the speaker 311 may be determined differently according to the deployed state of the display 321. The directivity angle of the speaker 311 may be set to 0 degree when the deployed state of the display 321 is the initial state or a completely embedded in the dashboard or center fascia. The directivity angle of the speaker 311 may be adjusted to face an upper front or upper-rear of the display 321. The directivity angle of the speaker 311 may be adjusted within the preset range in the three-dimensional space.

The sound system 10 may further include the lighting 701 installed inside the opening in which the speaker 311 of the dashboard is embedded or installed. The controller 601 may be configured to turn on the lighting 701 as the adjustung of the directivity angle of the speaker 311 begins.

The above description of the present invention described in FIGS. 1 to 11, which is not described with reference to FIG. 12, may be applied to the system 10 or the controller 610 thereof.

Meanwhile, as another embodiment of the present invention, the mobility device or vehicle 1000 including the sound system 10 is proposed.

In the present document, the "system" for adjusting the directivity angle of the speaker or each component included therein has been described as performing the control, but the "device" and the components included therein are only names and the scope of rights is not dependent on them.

That is, the proposed technology may be realized with other names besides the device, the processor, or the controlled In addition, the method, the scheme, or the like described above may be realized by code readable by software, a computer, other machine, device, or the like for adjusting the directivity angle of the speaker.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

The present invention has the following effects.

According to the present invention, it is possible to secure or improve the propagation path of the audio signal output from the sound system.

According to the present invention, it is possible to improve the quality deterioration of the audio signal output from the sound system.

Effects of the present invention are not limited to the above objects. Other effects that are not described above can be understood by those skilled in the art based on the following description of the present invention.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

## Claims

1. A sound system for a moving object, the sound system comprising:
a speaker whose directivity angle is adjustable and which is embedded or disposed in a dashboard; and
a controller adjusting the directivity angle of the speaker,
wherein the controller adjusts the directivity angle of the speaker according to a deployed state of a display disposed on the dashboard or a center fascia.

2. The sound system of claim 1, wherein the controller adjusts the directivity angle of the speaker based on that the display is present on a propagation path of an audio signal reaching a driver or a passenger from the speaker.

3. The sound system of claim 1, or 2, wherein the directivity angle of the speaker is determined differently according to the deployed state of the display, and /or
wherein the directivity angle of the speaker is set to 0 degree based on that the deployed state of the display is an initial state or the display is completely embedded in the dashboard or the center fascia, and/or
wherein the directivity angle of the speaker is adjusted to face an upper front of the display or an upper rear of the display.

4. The sound system of any one of claims 1 to 3, further comprising a lighting disposed inside an opening of the dashboard in which the speaker is embedded or disposed.

5. The sound system of claim 4, wherein the controller turns on the lighting as the adjusting of the directivity angle of the speaker begins.

6. The sound system of any one of claims 1 to 5, wherein the speaker includes at least one of a center speaker, a tweeter, or a mid-range speaker.

7. The sound system of any one of claims 1 to 6, wherein the directivity angle of the speaker is adjusted within a preset range in a three-dimensional space.

8. A control method of a sound system for a moving object, which is performed by the sound system including a speaker, the control method comprising:
obtaining, by a controller of the sound system, information on a deployed state of a display installed on a dashboard or a center fascia; and
adjusting, by the controller, a directivity angle of the speaker according to the deployed state of the display.

9. The control method of claim 8, further comprising:
adjusting the directivity angle of the speaker based on that the display is present on a propagation path of an audio signal reaching a driver or a passenger from the speaker.

10. The control method of claim 8, or 9, further comprising differently adjusting, by the controller, the directivity angle of the speaker according to the deployed state of the display.

11. The control method of claim 8, 9, or 10, further comprising:
setting, by the controller, the directivity angle of the speaker to 0 degree based on that the deployed state of the display is an initial state or the display is completely embedded in the dashboard or the center fascia.

12. The control method of any one of claims 8 to 11, further comprising:
adjusting, by the controller, the directivity angle of the speaker to face an upper front of the display or an upper rear of the display, and/or
adjusting, by the controller, the directivity angle of the speaker within a preset range in a three-dimensional space.

13. The control method of any one of claims 8 to 12, further comprising:
turning on, by the controller, a lighting disposed inside an opening of the dashboard in which the speaker is embedded or disposed as the adjusting of the directivity angle of the speaker begins.

14. A moving object having a sound system, the sound system including a speaker whose directivity angle is adjustable and which is embedded or disposed in a dashboard; and a controller adjusting the directivity angle of the speaker,
wherein the controller adjusts the directivity angle of the speaker according to a deployed state of a display disposed on the dashboard or a center fascia.

15. The moving object of claim 14, wherein the controller adjusts the directivity angle of the speaker based on that the display is present on a propagation path of an audio signal reaching a driver or a passenger from the speaker.

16. The moving object of claim 14 or 15, wherein the directivity angle of the speaker is determined differently according to the deployed state of the display, and/or
wherein the directivity angle of the speaker is set to 0 degree based on that the deployed state of the display is an initial state or the display is completely embedded in the dashboard or the center fascia.
